Europäisches Patentamt

European Patent Office

Office européen des brevets

(19)

(11) Numéro de publication: **0 267 849**
**A1**

## (12) DEMANDE DE BREVET EUROPEEN

(21) Numéro de dépôt: 87402518.2

(22) Date de dépôt: 06.11.87

(51) Int. Cl.⁴: **C 09 K 3/10**
**C 10 B 25/16**

(30) Priorité: 13.11.86 FR 8615741

(43) Date de publication de la demande:
**18.05.88 Bulletin 88/20**

(84) Etats contractants désignés: **DE FR IT**

(71) Demandeur: **DAUSSAN ET COMPAGNIE**
**29-33 Route de Rombas**
**F-57140 Woippy (FR)**

(72) Inventeur: **Daussan, Jean-Charles**
**42 rue Saint Marcel**
**F-57000 Metz (FR)**

**Daussan, Gérard**
**32 rue du Fort**
**F-57050 Longeville les Metz (FR)**

**Daussan, André**
**52 rue des Pépiniéres**
**F-57050 Longeville les Metz (FR)**

(74) Mandataire: **Bouju, André**
**Cabinet Bouju 38 avenue de la Grande Armée**
**F-75017 Paris (FR)**

(54) Joint pâteux pour réaliser l'étanchéité entre des surfaces soumises à la chaleur et devant être jointoyées.

(57) Le joint pâteux (5) est placé notamment sur le bord supérieur (6) d'un récipient métallurgique (1) pour réaliser l'étanchéité avec le couvercle (4) de celui-ci.

Le joint (5) est constitué par un mélange renfermant de 0,5 à 20% en poids de substances plastifiantes contenant notamment de l'argile et/ou de la bentonite, 80 à 99,5% en poids de particules organiques telles que du papier et/ou de particules inorganiques telles que du carbone, du carbure, des borures, des nitrures, des siliciures, des sulfures pris isolément ou en combinaison et/ou des oxydes réfractaires anhydres et/ou hydratés tels que silice, alumine, chrome-magnésie, magnésie, chamotte et leurs mélanges, le tout étant mis sous forme pâteuse par environ 20 à 30% en poids d'eau par rapport au poids des constituants secs, le mélange de ces constituants étant réalisé peu de temps avant l'application du joint.

Utilisation pour réaliser l'étanchéité entre les poches de coulée, les répartiteurs de coulée et leurs couvercles, les convertisseurs et leur hotte de désenfumage et de dépoussié-rage et toutes surfaces soumises à la chaleur et devant être jointoyées.

FIG.1

EP 0 267 849 A1

## Description

"Joint pâteux pour réaliser l'étanchéité entre des surfaces soumises à la chaleur et devant être jointoyées"

La présente invention concerne principalement un joint pâteux destiné à être placé sur le bord supérieur d'un récipient métallurgique et/ou sous le bord inférieur de son couvercle pour réaliser l'étanchéité entre le récipient et son couvercle.

Il peut également être placé sur toutes les tôleries, par exemple entre un convertisseur et sa hotte d'aspiration afin d'en assurer l'étanchéité aux gaz et aux fumées.

De nombreux récipients métallurgiques tels que les poches de coulée, les convertisseurs et les répartiteurs de coulée sont munis d'un couvercle pour éviter l'oxydation du métal liquide contenu dans ces récipients.

En particulier, lorsqu'on désire fabriquer un acier spécial de très haute qualité, on effectue une coulée sous vide pour éviter tout risque de contact entre le métal liquide et l'air ambiant.

Pour pouvoir réaliser le vide au-dessus du métal liquide contenu dans un récipient métallurgique, il faut bien entendu réaliser une jonction rigoureusement étanche entre le bord supérieur du récipient métallurgique et le couvercle de celui-ci.

Les récipients métallurgiques sont généralement garnis intérieurement d'un revêtement en briques réfractaires jointoyées au moyen d'un ciment réfractaire et/ou d'un revêtement réfractaire monolithique.

La face supérieure de ce garnissage en briques réfractaires adjacente au bord supérieur du récipient métallurgique est le plus souvent irrégulière. Cette irrégularité s'accentue au cours du temps, compte tenu de l'usure de la face supérieure de ces briques réfractaires, de sorte que celle-ci ne permet pas d'obtenir une jonction étanche avec le couvercle.

A cet effet, on pourrait envisager d'appliquer sur le bord supérieur du récipient métallurgique un enduit en matière réfractaire, tel qu'un ciment réfractaire. Cependant, les enduits de ce type durcissent très rapidement, notamment à la chaleur. Ainsi, étant donné qu'il peut s'écouler plusieurs heures entre le moment où l'enduit est appliqué et l'instant où le couvercle est appliqué sur le récipient, l'enduit risque d'être déjà lorsque le couvercle est posé sur lui, de sorte que l'étanchéité ne peut dans ce cas plus être réalisée.

De plus, du fait qu'un tel enduit durcit, il crée une liaison solide entre le bord supérieur du récipient et le couvercle, qui est ensuite difficile à éliminer lorsqu'on veut réouvrir le couvercle.

Le but de la présente invention est de remédier à cet inconvénient en créant un joint pâteux permettant de réaliser une étanchéité parfaite entre le bord supérieur d'un récipient métallurgique et son couvercle, ce joint étant facile à appliquer, peu coûteux, suffisamment résistant, et pouvant être enlevé aisément en fin de coulée.

Suivant l'invention, ce joint pâteux est caractérisé en ce qu'il est constitué par un mélange pâteux homogène renfermant 0,5 à 20% en poids de substances plastifiantes contenant notamment de l'argile et/ou de la bentonite et 80 à 99,5% en poids de particules organiques et/ou inorganiques ainsi que 20 à 30% en poids d'eau par rapport au poids des composants secs, le mélange de ces constituants étant réalisé peu de temps avant l'application du joint.

Parmi les plastifiants inorganiques, on citera, par exemple, les argiles, les bentonites, le graphite en poudre, les polyphosphates alcalins.

Parmi les plastifiants organiques, on citera, par exemple, les polysacharides, les résines naturelles et/ou synthétiques, les huiles et goudrons, le kérosène, des composés cellulosiques tels que : la blanose, le carboxyméthylcellulose ou tous autres composés tensio-actifs tels que, par exemple, les lignosulfonates.

L'argile et/ou la bentonite notamment contenues dans le joint donnent à celui-ci, en présence de l'eau, la consistance et la viscosité désirées pour obtenir de bonnes conditions d'application de cette composition.

Le joint ainsi réalisé reste pâteux tant que l'eau contenue dans la composition ne s'est pas évaporée sous l'effet de la chaleur dégagée par le métal liquide contenu dans le récipient métallurgique.

On a constaté qu'un tel joint reste pâteux pendant plusieurs heures, même lorsqu'il est exposé à une température supérieure à 100°C qui correspond à celle mesurée au bord supérieur d'un récipient métallurgique rempli d'acier liquide à environ 1 600°C.

Ainsi, le joint conforme à l'invention reste pâteux et cohérent au bord supérieur du récipient métallurgique pendant plusieurs heures, de sorte que lorsque le couvercle est appliqué sur le joint, celui-ci, en s'écrasant sur le bord supérieur du récipient métallurgique, assure une excellente étanchéité.

Cette étanchéité est maintenue tant que le joint reste plastique, c'est-à-dire tant que l'argile contient de l'eau. En fin de coulée, et lorsque l'argile du joint a complètement durci et que toute son eau s'est évaporée sous l'effet de la chaleur, le joint devient pulvérulent et n'assure plus aucune liaison mécanique avec le couvercle. Ainsi il devient très facile d'enlever ce couvercle.

D'autres particularités et avantages de l'invention apparaîtront encore dans la description ci-après.

Aux dessins annexés, donnés à titre d'exemples non limitatifs :

- la figure 1 est une vue en coupe longitudinale partielle, avec arrachements, d'une poche de coulée dont le bord supérieur est muni d'un joint pâteux conforme à l'invention,

- la figure 2 est une vue schématique illustrant le procédé conforme à l'invention.

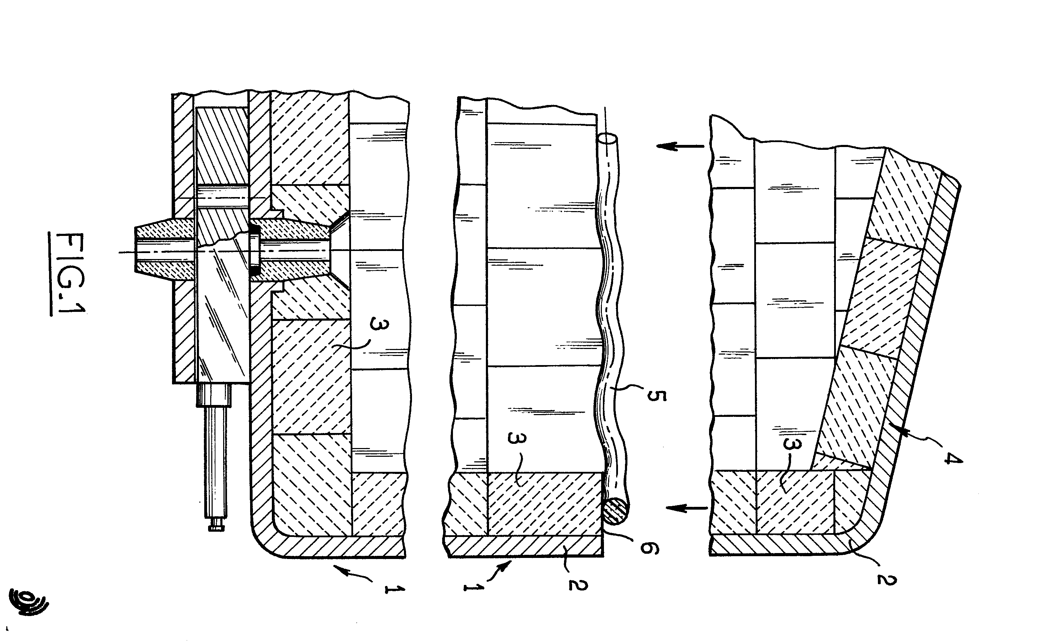

Dans la réalisation de la figure 1, on a représenté une poche de coulée 1 comportant un manteau métallique extérieur 2 garni intérieurement par des briques réfractaires 3. Cette poche de coulée 1 comprend un couvercle 4 dont la paroi peut présenter la même structure que celle de la poche de coulée proprement dite.

Conformément à l'invention, le joint pâteux 5 placé sur le bord supérieur 6 irrégulier en briques réfractaires de la poche de coulée 1 pour réaliser l'étanchéité avec le couvercle 4 est constitué par un mélange pâteux homogène renfermant 0,5 à 20% en poids de substances plastifiantes contenant notamment de l'argile et/ou de la bentonite, et 80 à 99,5% en poids de particules organiques et/ou inorganiques, ainsi que 20 à 30% en poids d'eau par rapport au poids des composants secs. Le mélange de ces constituants est réalisé peu de temps avant l'application du joint 5 sur le bord supérieur 6 de la poche de coulée.

Le joint 5 appliqué sur le bord supérieur 6 de la poche de coulée est constitué dans l'exemple représenté, par un boudin préformé d'une seule pièce.

L'argile contenue dans le joint 5 est de préférence de la bentonite.

Les particules inorganiques contenues dans le joint 5 sont choisies par exemple dans le groupe des oxydes réfractaires hydratés et/ou anhydres comprenant notamment la silice, l'alumine, la chrome-magnésie, la magnésie, la chamotte et le mélange de ces composés. Bien entendu, d'autres particules inorganiques peuvent être présentes dans la composition, telles que du carbone, du carbure, des borures, des nitrures, des siliciures, des sulfures, pris isolément ou en combinaison.

De préférence, le joint 5 renferme entre 5 et 10% en poids de bentonite. Ces proportions permettent au joint 5 d'avoir la consistance pâteuse idéale en vue de son application.

Le joint 5 renforme avantageusement jusqu'à 3% en poids de substance tensio-active telle que, par exemple, du ligno-sulfonate de soude. La présence de ce composé dans la composition modifie la rhéologie du mélange et facilite la mise en oeuvre du cordon.

La composition du joint 5 renforme en outre, de prérérence, jusqu'à 10% en poids de fibres organiques et/ou minérales telles que de l'ouate de papier et/ou de la laine de roche et/ou de scories et/ou de verre et/ou de céramique pour augmenter la résistance mécanique du joint pâteux.

On donne ci-après, à titre d'exemple non limitatif, la composition pondérale d'un joint pâteux conforme à l'invention :

> bentonite : 7%
> Sable siliceux : indice de finesse 100 (ASTM) : 30%
> Silice : de surface spécifique 2 450 m$^2$/g : 60%
> Ouage de papier : 2,4%
> ligno-sulfonate de soude : 0,6%
> Eau : 25% du poids des composants secs.
> Densité à l'état pâteux humide : 1,62
> Densité à l'état de poudre sèche : 0,8

Pour préparer et appliquer sur le bord supérieur 6 de la poche de coulée le joint pâteux 5 en forme de boudin, on procède de la façon suivante :

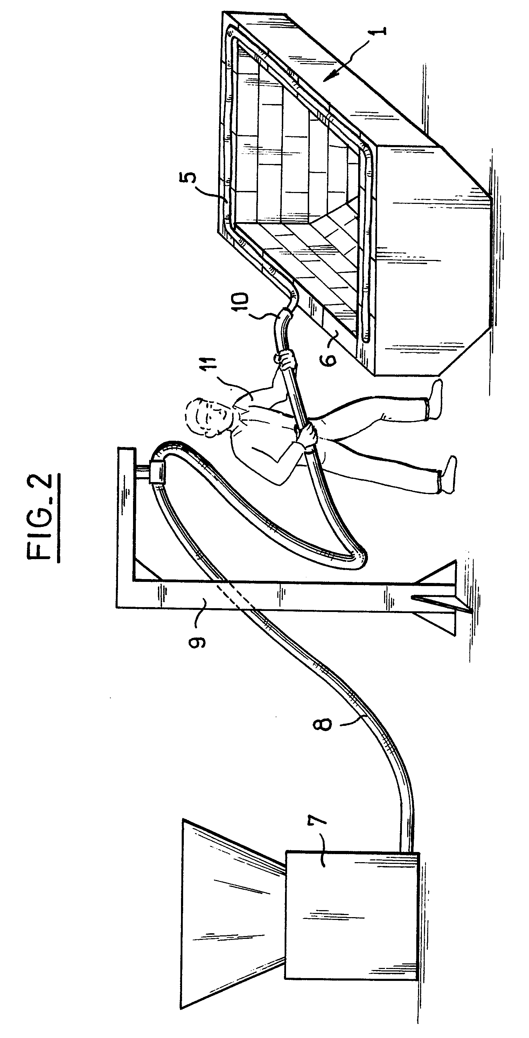

On mélange les constituants solides du joint 5 avec de l'eau dans l'appareil 7 (voir figure 2) de façon à obtenir une pâte homogène. On pousse sous pression, au moyen d'une pompe et/ou d'une vis faisant partie de l'appareil 7, cette pâte dans un tuyau souple 8 suspendu à une potence 9, de façon à extruder à la sortie de ce tuyau qui comporte une lance 10 tenue par un robot et/ou un jointoyeur 11, un boudin pâteux 5 continu qui est appliqué en continu sur le bord supérieur 6 de la poche de coulée.

Les constituants du joint 5 sont choisis de façon à obtenir un boudin suffisamment pâteux et résistant pour que celui-ci puisse être extrudé à la sortie de la lance 10 de façon continue. Ainsi, l'application du joint 5 sur le bord supérieur 6 de la poche de coulée est une opération très aisée qui peut être effectuée à une certaine distance de la poche de coulée 1, de sorte que le robot et/ou jointoyeur 11 ne risque pas d'être brûlé par la chaleur dégagée par le métal liquide contenu dans la poche de coulée 1.

Etant donné que le joint 5 reste pâteux pendant plusieurs heures, celui-ci peut être appliqué sur le bord supérieur 6 de la poche de coulée, avant l'introduction du métal liquide à l'intérieur de cette poche.

Lorsque le couvercle 4 est appliqué sur le joint 5, celui-ci est écrasé, de sorte que toutes les irrégularités de la poche de coulée et de son couvercle sont compensées. On obtient ainsi une excellente étanchéité entre le bord supérieur 6 de la poche de coulée et le bord adjacent du couvercle 4.

Cette étanchéité est maintenue pendant plusieurs heures, c'est-à-dire pendant toute la durée du séjour du métal liquide à l'intérieur de la poche de coulée 1.

Plus précisément, le joint 5 reste pâteux tant que la bentonite qu'il renferme retient de l'eau. La durée nécessaire pour évaporer toute l'eau retenue par la bentonite dépend de la quantité totale de bentonite contenue dans le joint, c'est-à-dire de la proportion de bentonite et de l'épaisseur du joint.

L'épaisseur optimale du joint 5 est de l'ordre de 5 à 15 cm.

La teneur idéale en bentonite est comprise entre 5 et 10% en poids. Toutefois, cette teneur peut varier entre 0,5 et 20%. Au-delà de cette limite de 20%, la pâte du joint 5 est trop adhérente et ne peut plus être facilement extrudée par le tuyau souple 8.

En-dessous de 0,5%, la bentonite n'assure plus une cohésion suffisante au joint.

Après quelques heures, c'est-à-dire en fin de coulée, le joint 5 est complètement sec et devient pulvérulent. Le couvercle 4 peut alors être enlevé facilement, étant donné que le joint 5 n'adhère plus, ni au bord 6 de la poche de coulée, ni au bord du couvercle 4.

De même étant donné que le joint 5 est devenue pulvérulent, il est facile de l'éliminer et de le remplacer par un nouveau joint pâteux pour une autre opération de coulée.

Les qualités du joint 5 peuvent être améliorées en substituant partiellement ou totalement la charge réfractaire par des composés inorganiques renfermant de l'eau de cristallisation, tels que des hydroxydes de calcium et/ou d'aluminium ou tous autres composés contenant de l'eau de cristallisation.

Ces hydroxydes ont la propriété de cristalliser avec un grand nombre de molécules d'eau de cristallisation.

Lorsque le joint 5 est exposé à la chaleur du métal liquide contenu dans le récipient métallurgique, l'eau de cristallisation des composés précités est éliminée à haute température, en formant un palier de température qui retarde la montée en température du joint. Ainsi, la présence de ces composés à molécules d'eau de cristallisation retarde la montée en température du joint, de sorte que la plasticité de la bentonite est prolongée.

A cet égard, il y a avantage à utiliser plusieurs composés à molécules d'eau de cristallisation présentant des paliers de libération de ces molécules d'eau à des températures différentes. Ainsi, il est possible de contrôler d'une manière très précise l'évolution de la température et de la plasticité du joint 5.

## Revendications

1. Joint pâteux (5) destiné à être placé sur toutes surfaces soumises à la chaleur devant être jointoyées, caractérisé en ce que ce joint (5) est constitué par un mélange pâteux homogène renfermant 0,5 à 20% en poids de substances plastifiantes contenant notamment de l'argile et/ou de la bentonite, et 80 à 99,5% en poids de particules organiques et/ou inorganiques, ainsi que 20 à 30% en poids d'eau par rapport au poids des composants secs, le mélange de ces constituants étant réalisé peu de temps avant l'application du joint.

2. Joint pâteux conforme à la revendication 1, caractérisé en ce qu'il est constitué par un boudin préformé d'une seule pièce.

3. Joint pâteux conforme à l'une des revendications 1 ou 2, caractérisé en ce que la ou les substances plastifiantes sont organiques et/ou inorganiques, et comportent entre 0,2 et 10% d'argile et/ou de bentonite.

4. Joint pâteux conforme à l'une des revendications 1 à 3, caractérisé en ce que les particules inorganiques sont choisies dans le groupe comprenant la silice, l'alumine, la chrome-magnésie, la magnésie, la chamotte et le mélange de ces composés.

5. Joint pâteux conforme à l'une des revendications 1 à 4, caractérisé en ce qu'il renferme entre 5 et 10% en poids de bentonite.

6. Joint pâteux conforme à l'une des revendications 1 à 5, caractérisé en ce qu'il renferme en outre jusqu'à 3% en poids de ligno-sulfonate en tant que tensio-actif.

7. Joint pâteux conforme à l'une des revendications 1 à 6, caractérisé en ce qu'il renferme en outre jusqu'à 10% en poids de fibres organiques et/ou minérales.

8. Joint pâteux conforme à l'une des revendications 1 à 7, caractérisé en ce qu'il renferme de 80 à 99,5% de particules inorganiques, d'oxydes réfractaires hydratés et/ou anhydres.

9. Joint pâteux conforme à la revendication 8, caractérisé en ce que les composés renfermant des molécules d'eau de cristallisation sont des hydroxydes métalliques.

10. Joint pâteux conforme à l'une des revendications 8 ou 9, caractérisé en ce qu'il comporte plusieurs composés différents comportant des molécules d'eau de cristallisation, les températures de libération de ces molécules étant différentes.

FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 346 430  (COAL INDUSTRY)<br>* Page 1, lignes 1-8; page 2, lignes 1-36; page 4, lignes 18-39; revendications 1-8 *<br>--- | 1-4,7 | C 09 K    3/10<br>C 10 B   25/16 |
| Y | GB-A-1 356 382  (FOSECO)<br>* Page 1, lignes 24-32,50-71; page 2, lignes 3-21, 46-127; page 3, lignes 1-9; revendications 1-6 *<br>--- | 1-4,7 | |
| X,Y | US-A-4 092 192  (D. MAGYARI)<br>* Colonne 2, lignes 3-55; colonne 3, lignes 12-58; colonne 4, lignes 24-35; revendications 1,4-6,9,11 *<br>----- | 1,3,8,9 | |

DOMAINES TECHNIQUES RECHERCHES (Int. Cl.4)

C 09 K
C 10 B

Le présent rapport a été établi pour toutes les revendications

| Lieu de la recherche | Date d'achèvement de la recherche | Examinateur |
|---|---|---|
| LA HAYE | 11-01-1988 | BOULON A.F.J. |

EPO FORM 1503 03.82 (P0402)